Europäisches Patentamt

European Patent Office

Office européen des brevets

(19)

(11) **EP 1 184 233 B1**

(12) **EUROPEAN PATENT SPECIFICATION**

(45) Date of publication and mention
of the grant of the patent:
**30.03.2005 Bulletin 2005/13**

(51) Int Cl.⁷: **B60R 21/01**

(21) Application number: **01121014.3**

(22) Date of filing: **31.08.2001**

(54) **Device for sensing operating states of a vehicle**

Einrichtung zur sensorischen Erfassung von Fahrzeugbetriebszuständen

Appareil de détection de l'état d'un véhicule

(84) Designated Contracting States:
**DE ES FR GB IT**

(30) Priority: **01.09.2000 JP 2000265281**

(43) Date of publication of application:
**06.03.2002 Bulletin 2002/10**

(73) Proprietor: **YAMAHA HATSUDOKI KABUSHIKI KAISHA**
Iwata-shi Shizuoka-ken (JP)

(72) Inventor: **Hasegawa, Takahiko**
Iwata-shi, Shizuoka-ken (JP)

(74) Representative: **Grünecker, Kinkeldey,
Stockmair & Schwanhäusser Anwaltssozietät
Maximilianstrasse 58
80538 München (DE)**

(56) References cited:
**DE-A- 19 821 134          US-A- 5 382 049
US-A- 5 445 443          US-A- 5 835 873
US-A- 6 038 495**

• **PATENT ABSTRACTS OF JAPAN vol. 1997, no. 12, 25 December 1997 (1997-12-25) & JP 09 207706 A (HITACHI LTD;HITACHI CAR ENG CO LTD), 12 August 1997 (1997-08-12)**

## Description

The present invention relates to a device for sensing operating states of a vehicle, in particular to a device for sensing operating states of a vehicle using an acceleration sensor for detecting the attitude, acceleration, and deceleration of a motorcycle body.

Some motorcycles are provided with an electronic control unit (ECU) for electronic fuel injection (EFI) control and ignition timing control. The ECU controls the operation of injectors and ignition coils according to predetermined maps and control programs. Such an ECU is made by mounting on a printed circuit board semiconductor elements of calculation circuits for processing data and memory circuits in which maps and programs are stored, and is mounted as a single unit on the vehicle body.

Such motorcycles are also provided with a fall sensor for controlling to stop fuel injection and ignition when fall of the vehicle body is detected.

Conventional fall sensors are of a mechanical type in which a weight or a pendulum is used that moves as the vehicle body banks to turn on a switch with the weight or pendulum at the time of falling. Such a fall sensor of the mechanical constitution is attached, separately from an ECU, to the vehicle body. With such a conventional arrangement, fall detection data is sent to the ECU which controls the engine according to the data detected at the time of falling.

On the other hand, an acceleration sensor using semiconductor elements is known. Such an acceleration sensor is constituted to form a capacitor between electrodes to detect the magnitude of acceleration from the change in capacitance according to the acceleration. Such an acceleration sensor does not have a large mechanical constitution except for the electrode but is in the form of a semi conductor element capable of detecting acceleration data with high accuracy.

However, the conventional mechanical sensor is not satisfactory enough in both detection accuracy and reliability. Therefore, to improve the accuracy and reliability, it is necessary to prevent poor switch contact and to devise smooth motion of the weight or pendulum. In order to do so, it is necessary to make components with electroplating or without stepped shape, which results in cumbersome production processes and increased costs. Sizes and weights of components also increase, and spaces for other components are restricted.

DE 198 21 134 A1 discloses a device for sensing operating states of a motorcycle comprising an acceleration sensor and an electronic control unit of the motorcycle, wherein the acceleration sensor is adapted to detect collision of the motorcycle.

US 5,445,443 discloses a device for sensing operating states of a motorcycle which comprises an acceleration sensor and an electronic control unit of the motorcycle, wherein the acceleration sensor is adapted to detect the fall of the motorcycle thereby calculating the actual tilt angle from the signals received from the acceleration sensor.

However, said devices are unable to overcome the problems outlined above.

Accordingly, it is an objective of the present invention to provide an improved device for sensing operating states of a vehicle of a simple constitution and at low costs being able to detect different operating states of the vehicle. Moreover, it is intended to detect acceleration with a high accuracy, reduce installation space, simplify vehicle constitution, and reduce costs.

This objective is solved in an inventive manner by a device for sensing operating states of a vehicle having the features of claim 1.

Accordingly, the acceleration sensor is installed in the ECU to detect various operating states of the vehicle through acceleration. In this way, there is no need of providing an acceleration sensor separate from the ECU in a separate position. As a result, the detection accuracy is improved, space for the sensor is reduced, structure is simplified, and cost is reduced.

In that case, as the acceleration sensor is used in place of the conventional mechanical fall sensor and installed in the ECU, the space for the fall sensor is unnecessary and the structure is simplified.

The acceleration sensor can also be used as a collision sensor by arranging to detect a collision when a deceleration value detected with the acceleration sensor exceeds a specified threshold. Therefore, at the time of a collision when fuel supply must be immediately stopped, the collision is detected even if the vehicle does not fall to promptly cope with the collision with a quick, appropriate control.

Moreover, the acceleration sensor is placed laterally to detect the component, determined by the sine of the vehicle body bank angle, of the gravitational acceleration.

Thereby detected values of the vehicle body attitude from the upright state (bank angle of 0 degree) to the fallen state (bank angle of 90 degrees) can be expressed with a sine curve. As a result, the amount of change in the detected value at bank angles between 0 degree and the angle corresponding to the threshold for determining a fall (usually an angle between 70 and 90 degrees) is greater in comparison with a constitution with a vertically placed acceleration sensor (in which the detected value is expressed with a cosine curve). This facilitates the fall determination and enhances reliability in the determination.

In a preferred embodiment, the zero point of the acceleration sensor is adjusted in the state of the ECU being mounted on the vehicle body, the correction data is written into a write-enabling non-volatile memory, and the bank angle of the vehicle body is calculated from both the correction data of the memory and the value detected with the acceleration sensor.

With this embodiment, since the zero point of the acceleration is adjusted in the state of the ECU being mounted on the vehicle body, the zero point of the sensor relative to the vehicle body is set accurately irrespective of the mounting accuracy of the acceleration sensor. The zero point correction data is stored in a non-volatile memory capable of electrically erasing and writing data, for example an EEPROM (electrically erasable programmable read-only memory) to correct the values detected with the acceleration sensor. Thus, always accurate bank angle detection data is obtained.

Other preferred embodiments of the present invention are laid down in further dependent claims.

In the following, the present invention is explained in greater detail with respect to several embodiments thereof in conjunction with the accompanying drawings, wherein:

FIG. 1   is for explaining the constitution of an embodiment of this invention;

FIG. 2   is for explaining the fall judgment threshold using an acceleration sensor;

FIG. 3   is a flowchart of a fall judgment routine;

FIG. 4   is for explaining methods of attaching the acceleration sensor;

FIG. 5   shows flowcharts of zero point setting and bank judgment routine;

FIG. 6   is a flowchart of a collision judgment routine; and

FIG. 7   is for explaining the collision judgment threshold.

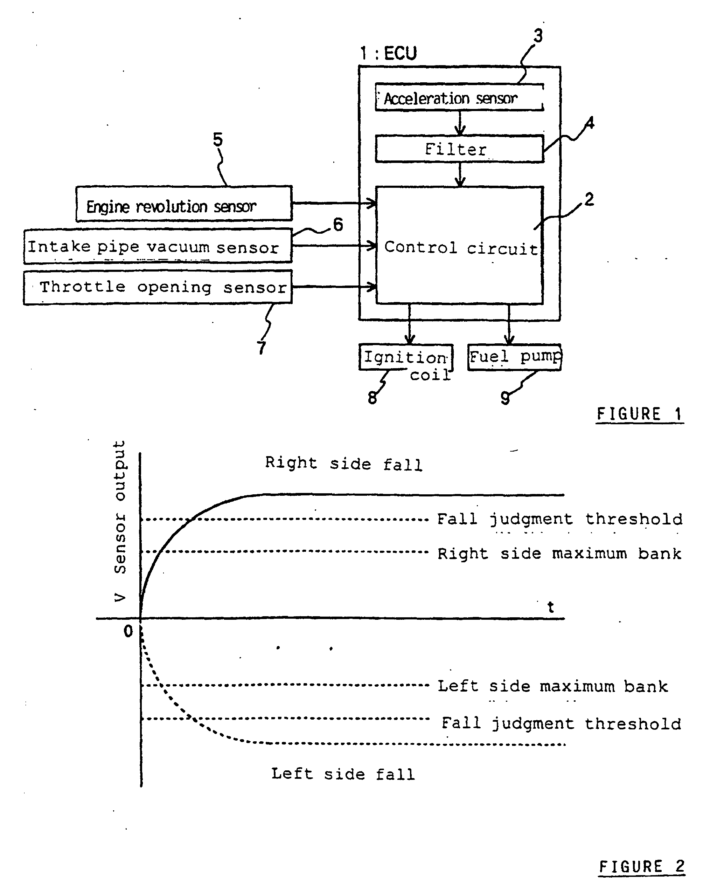

FIG. 1 is a block diagram of a control system for a motorcycle as an embodiment.

A control circuit 2 comprising semiconductor elements (not shown) such as calculating circuits and memory circuits is provided in an ECU (electronic control unit) made as a single unit component. The control circuit 2 is made by mounting semiconductor elements such as memory circuits on a printed circuit board (not shown). On the same printed circuit board are mounted an acceleration sensor 3 and a filter 4. To the control circuit 2 are connected an engine revolution sensor 5, an intake vacuum sensor 6, a throttle opening sensor 7, etc. to input respective detected signals. The control circuit 2, on the basis of these detection data and according to a predetermined program, actuates an ignition coil 8, a fuel pump 9, and an injector (not shown), and controls ignition timing and fuel injection commensurate with operating conditions.

The acceleration sensor 3 is used to detect the bank angle of the vehicle body in amounts varying according to the gravitational acceleration acting on the vehicle body. When the vehicle is banked more than a maximum bank angle, the acceleration sensor is used as a fall sensor to determine the fall of the vehicle. The detected signals of the acceleration sensor 3 are passed through the filter 4 to remove noise due to road surface irregularity and vibration and inputted to the control circuit 2. The filter 4 may be constituted either as hardware using circuits, or as software for processing the detected signals, or combination of both.

FIG. 2 is a graph for explaining the fall determination using detected signals of the acceleration sensor (fall sensor) 3.

From the acceleration sensor 3 are detected outputs corresponding to the bank angles of the vehicle body, for example a positive output when the vehicle banks to the right or a negative output when the vehicle banks to the left. When the vehicle falls, the output increases as shown in the figure according to the bank angles between 0 degree (with the vehicle in upright attitude) and 90 degrees (in the fallen state) along the lapse of time t. Right and left fall determination thresholds are set to output voltages between the output voltage at maximum bank angles up to which the vehicle can be driven and the output voltage in the fallen state at 90 degrees. Thus, the vehicle can be determined to have fallen when the output of the acceleration sensor exceeds the threshold.

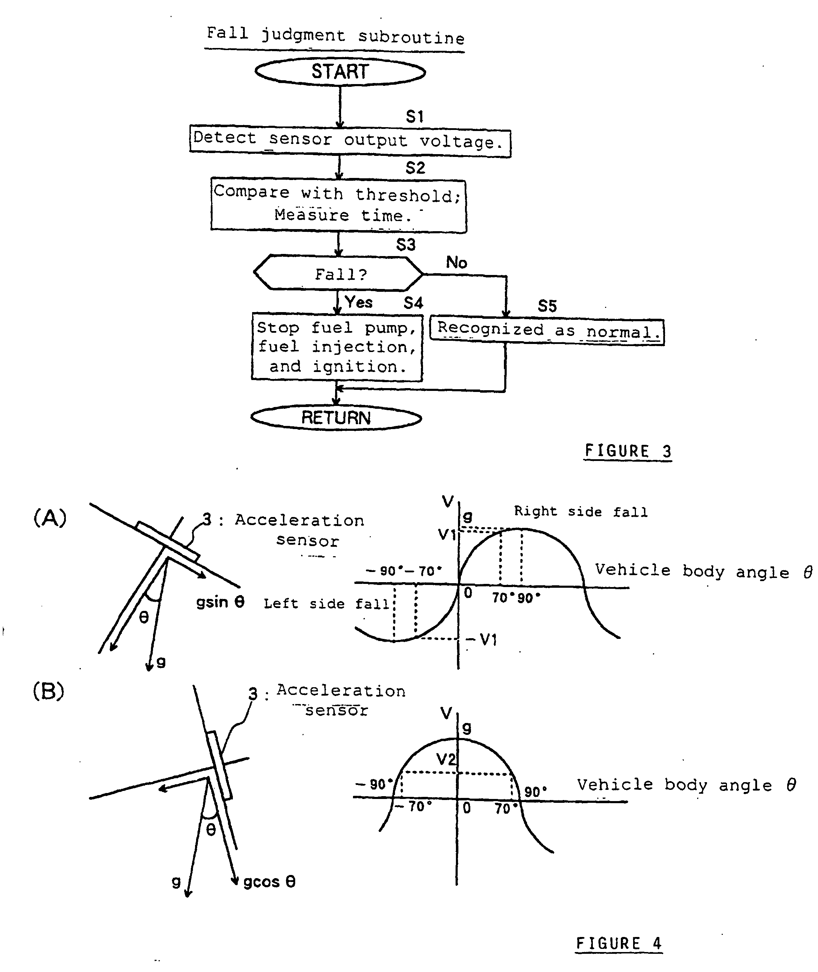

FIG. 3 is a flowchart of a subroutine of determining a fall using the control circuit 2 shown in FIG. 1. This subroutine is the one which is made to interrupt a main routine of ordinary vehicle control repeated for example at several millisecond intervals and to constitute the main routine.

First, the bank of the vehicle body is detected with the acceleration sensor 3, and the detected voltage data is sent to the control circuit 2, and the control circuit 2 reads the data (step S1). Next, the detected data is compared with the threshold (step S2) to determine if the vehicle has fallen (step S3). Here, in order not to detect the noise and vibration due to road surface irregularity as the bank angle, a certain detection time may be provided to prevent false detection. In that case, it may be arranged either to measure time with a timer or to prevent false detection with a filter.

If the detected voltage has not reached the threshold, it is recognized as a normal state, not a fall, and the process goes back to the main routine (step S5). If the threshold is exceeded, it is determined as a fall, fuel injection is stopped, and ignition is stopped (step S4). At this time, the solenoid valve of the injector is closed to stop fuel injection, and also driving the fuel pump is stopped to prevent fuel from being drawn out of the fuel tank and from being spilled.

In order to resume vehicle operation after the fall, first the vehicle body is brought back to upright attitude. If the main switch is off, the switch is turned on, and further the starter switch is turned on. Here, when the main switch is turned on (before turning on the starter switch), driving the fuel pump is started. This is to secure fuel pressure when the starter switch is turned on. When the starter switch is turned on and starting conditions are met without any anomaly being detected, ignition and fuel injection are started and controlled according to the main routine.

If the main switch remains on when the vehicle falls, and if no anomaly is detected when the vehicle is brought back to upright attitude and the starter switch is turned on, driving the fuel pump is started, and further ignition and fuel injection are started and controlled according to the main routine.

FIG. 4 is for explaining different outputs depending on the direction of attaching the acceleration sensor (fall sensor) 3.

FIG. 4 (A) shows the detected signal when the acceleration sensor 3 is attached laterally. In this case, assuming the bank angle as $\theta$, a sine component of the gravitational acceleration g, namely $g\sin\theta$, is detected. Here, since the output voltage V increases from 0 along the sine curve, the output voltage V1, when bank angle $\theta$ of the vehicle body reaches the maximum value (in this example it is assumed to be 70 degrees), assuming the output voltage at the maximum bank angle (90 degrees at a fall) as 1g, is expressed as:

$$V1 = g\sin 70 = 0.94g$$

Since the threshold voltage for determining the fall is greater than this, the difference between the threshold voltage and the voltage at the bank angle of 0 degree is very great. As a result, discrimination of detected data is easy, which enhances the reliability in determining the fall.

FIG. 4(B) shows the detected signal with the acceleration sensor 3 placed vertically. In this case, the cosine component $g\cos\theta$ of the gravitational acceleration g is detected, where $\theta$ is the bank angle. Here, the output voltage V decreases from g at the bank angle $\theta$ of 0 degree along the cosine curve. Therefore, the output voltage V2 at the maximum bank angle of 70 degrees is expressed as follows, where the output voltage in the upright attitude ($\theta = 0$) corresponding to the maximum output is assumed to be 1g:

$$V2 = g\cos 70 = 0.34g$$

Therefore, the difference from the value at the bank angle $\theta$ of 0 degree is 0.66g which is smaller than the value in the case of FIG. 4(A). Therefore, in case the fall is judged by detecting the bank angle of the vehicle body, the difference in the output voltage of the sensor 3 between the upright and 70-degree-banked attitudes is greater with the acceleration sensor 3 placed laterally than with the acceleration sensor 3 placed vertically. Therefore, placing the acceleration sensor 3 laterally is advantageous because it is less affected with noise. Another advantage of the lateral placement is that whether the vehicle body is banked right or left can be judged from positive or negative sign of the output voltage.

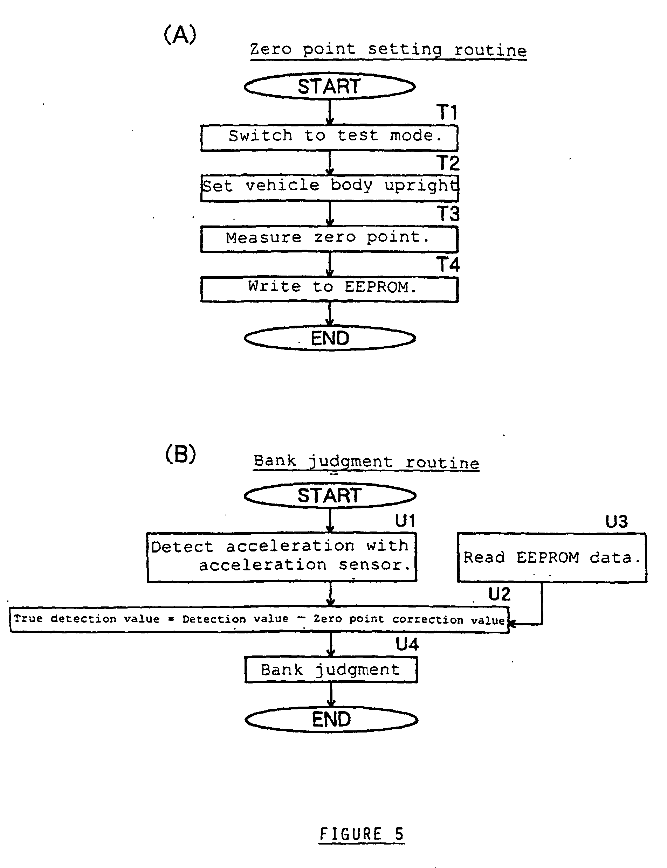

FIG. 5 is a flowchart of the zero point correction method using the above-described acceleration sensor as the fall sensor. To detect the bank angle of the vehicle by the use of an acceleration sensor, the acceleration sensor must be attached to the vehicle body so that the angle of 0 degree is indicated when the vehicle body is in the upright attitude; laterally or vertically, at 0 degree or 90 degrees relative to the vehicle body. If the sensor is attached obliquely, detected angle includes an offset value corresponding to the attachment angle, and so the detected bank angle becomes less accurate. However, the work of attaching the acceleration sensor exactly at right angles to the vehicle body is cumbersome, taking much time. Another problem is variation in the attachment angle from one vehicle to another due to assembly error in the sensor itself, assembly error within the ECU, and the attachment error of the ECU.

This embodiment makes it possible to detect accurately the bank angle of the vehicle body even if the acceleration sensor is attached obliquely to the vehicle body.

When the lateral and vertical placements of the acceleration sensor are compared in connection with the zero point correction, the lateral placement is advantageous as described with FIG. 4 (A) above if the acceleration sensor is attached with a certain degree of accuracy to the vehicle body. However, in case the zero point correction error is great to some extent, the vertical placement makes it possible to absorb a large error by setting a wide range of zero point correction. In other words, when the sensor is attached with rough accuracy with a large displacement from the correct zero point, and if the sensor is placed laterally, since the output voltage margin between the angles of 70 and 90 degrees is small (FIG. 4(A)), the displacement amount becomes greater than the margin and so a fall of 90 degrees cannot be detected. With the vertical placement in contrast to the above, since the output voltage margin between the angles of 70 and 90 degrees is great (FIG. 4(B)), the displacement amount remains within the margin and the fall of 90 degrees can be detected. In this case, however, countermeasure against noise is required to be more accurate than with the lateral placement.

FIG. 5(A) shows a routine for setting the zero point. The zero point setting is done in the test mode when the vehicle assembly is completed (step T1). Or, the zero point correction may be done by setting the ECU to the test mode for example by operating an operation mode button. In the test mode, the vehicle body is set upright (step T2). The zero point is measured in this state (step T3). This zero point measurement provides an output value (zero point measurement data) of the sensor as a correction data with the vehicle body in the upright state. The correction data is written into a write-enabling, non-volatile memory, for example an EEPROM (step T4). Thus, even if the acceleration sensors are attached at different oblique angles from one vehicle body to another, the zero point correction data are measured and stored for respective vehicle bodies in the ECU.

FIG. 5(B) is a flowchart of a bank angle judgment routine using the above-described correction data. This routine is one for interrupting between the step S1 of detecting the sensor output voltage and the step S2 of comparing a threshold value in the fall judgment routine shown in FIG. 3. First, a bank angle (acceleration) is detected with the acceleration sensor (step U1). Then, a correction data is read from the EEPROM (step U3), the correction data is subtracted from the detected data to determine a true, detected bank angle. In this case, the detected value can be converted into an angle by a calculation process. The bank angle is judged from the true detected value. Thus, accurate bank angle can be detected irrespective of the attached state of the acceleration sensor.

Such zero point correction may be done by turning on the power when the vehicle is in the upright attitude as standing on the center stand. This makes it possible to operate by rewriting with a correct data even when the stored zero point data is altered by external disturbance or any other cause.

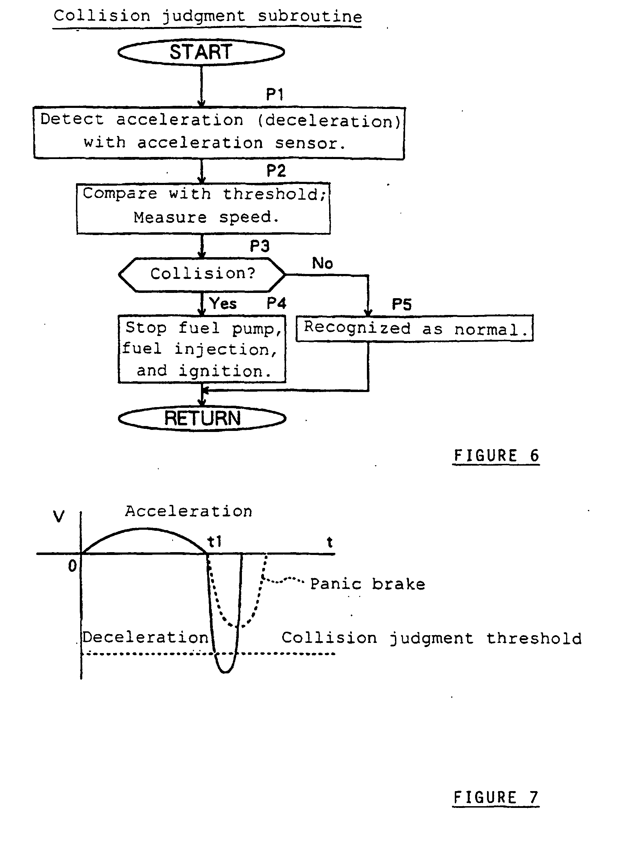

FIG. 6 is a flowchart of an embodiment using the acceleration sensor as a collision sensor. Like the subroutine of FIG. 3, the subroutine of FIG. 6 is the collision judgment subroutine which constitute the main routine. While the above-described embodiment is arranged to detect the bank angle of the vehicle body by detecting the component of the gravitational acceleration perpendicular to the advancing direction of the vehicle using the acceleration sensor, this embodiment is arranged to detect the acceleration and deceleration of the vehicle body in the advancing direction of the vehicle.

First, acceleration (decelerating direction) of the vehicle body is detected with the acceleration sensor (step P1). The voltage value of the deceleration is compared with a predetermined collision judgment threshold along with detecting the vehicle speed (step P2). Next, whether it is a collision is judged from the data of the step P2 (step P3). A collision is determined to have occurred when the deceleration is abnormally greater than that of a panic brake in ordinary driving, exceeding a threshold, and the vehicle speed is below a predetermined value or zero. In this case, a condition of continuation of collision judgment state for a specified judgment duration (for example one second) maybe set to prevent incorrect detection due to noise, vibration, etc. Alternatively, noise may be removed by calculation process using software.

When the determination in the step 3 proves to be a collision, fuel injection and ignition are stopped (step P4). At this time, the solenoid valve of the injector is closed to stop fuel injection, and also driving the fuel pump is stopped to prevent fuel from being drawn out of the fuel tank and from being spilled.

When the determination in the step 3 proves not to be a collision, the situation is recognized to be normal and the process goes back to the main routine (step P5).

In order to resume vehicle operation after the fall, first the vehicle body is brought back to upright attitude like the case of fall described before. If the main switch is off, the switch is turned on, and further the starter switch is turned on. Here, when the main switch is turned on (before turning on the starter switch), driving the fuel pump is started. This is to secure fuel pressure when the starter switch is turned on. When the starter switch is turned on and starting conditions are met without any anomaly being detected, ignition and fuel injection are started and controlled according to the main routine.

If the main switch remains on when the vehicle falls, and if no anomaly is detected when the vehicle is brought back to upright attitude and the starter switch is turned on, driving the fuel pump is started, and further ignition and fuel injection are started and controlled according to the main routine.

FIG. 7 is for explaining the threshold of collision judgment routine using the above-described acceleration sensor.

When panic brake is applied at a time point t1 during acceleration (or deceleration) in ordinary driving state, negative output voltage V of the acceleration sensor is detected as shown with a dotted curve. A voltage lower than that detected in panic braking during ordinary drive is preset as a threshold for determining a collision. As shown with the solid curve in the graph, when a deceleration voltage value is detected that exceeds the threshold, such a situation is judged as a collision as explained in the above step P3.

According to this invention as described above, in case a motorcycle is provided with an ECU, an acceleration sensor is installed in the ECU to detect various operating states of the vehicle through acceleration. This makes it unnecessary to provide a sensor that is separate from the ECU in a different place, enhancing detection accuracy, reducing space, simplifying constitution, and reducing costs.

In this case, since the acceleration sensor is used as a fall sensor installed in the ECU in place of conventional mechanical fall sensor, the space for the fall sensor becomes unnecessary and so the constitution is simplified.

And the acceleration sensor may be used as a collision sensor by arranging that collision is recognized when the deceleration value detected with the acceleration sensor exceeds a predetermined threshold. In this way, in a situation requiring immediate stop of the fuel pump as in a collision, the collision can be detected even without the vehicle falling, and appropriate control can be made by quickly coping with the collision.

**Claims**

1. Device for sensing operating states of a motorcycle, comprising an electronic control unit (1) and an acceleration sensor (3) which is installed in the electronic control unit (1) and adapted to detect fall or fall and collision of the motorcycle, wherein the acceleration sensor (3) is arranged essentially lateral relative to the body of the motorcycle and is adapted to detect the component of the gravitational acceleration as determined by a sine function of the bank angle of the body of the motorcycle or the acceleration sensor is arranged essentially vertical relative to the body of the motorcycle and is adapted to detect the component of the gravitational acceleration as determined by a cosine function of the bank angle of the body of the motorcycle.

2. Device according to claim 1, **characterized in that** the acceleration sensor (3) is connected to a control circuit (2) of the electronic control unit (1).

3. Device according to claim 1 or 2, **characterized in that** a filter means (4) is arranged between the acceleration sensor (3) and the control circuit (2), wherein the filter means is formed by hardware using circuits or by software for processing the signals detected by the acceleration sensor (3).

4. Device according to at least one of the preceding claims 1 to 3, **characterized in that** the acceleration sensor (3) is used to detect a collision based on a comparison of an acceleration or deceleration of the body of the motorcycle in the advancing direction of the motorcycle to pre-determined threshold values.

5. Device according to at least one of the preceding claims **1 to 4, characterized in that** the acceleration sensor is zero-corrected in the state of the electronic control unit (1) being attached to the body of the motorcycle, and a write-enabling non-volatile memory is provided for storing correction data.

6. Device according to claim 5, **characterized in that** the control circuit (2) is adapted to calculate the bank angle of the motorcycle from both an actual value detected with the acceleration sensor (3) and the correction data in the write-enabling non-volatile memory.

**Patentansprüche**

1. Vorrichtung zum Erfassen der Betriebszustände eines Motorrades, die eine elektronische Steuerungseinheit (1) und einen Beschleunigungssensor (3), der in der elektronischen Steuerungseinheit (1) installiert ist, aufweist und vorgesehen ist, das Fallen oder das Fallen und die Kollision des Motorrades zu erfassen, wobei der Beschleunigersensor (3) im Wesentlichen seitlich im Verhältnis zu der Karosserie des Motorrades angeordnet und vorgesehen ist, die Komponente der Gravitationsbeschleunigung zu erfassen, wie sie durch eine Sinusfunktion des Schräglagenwinkels der Karosserie des Motorrades bestimmt wird, oder der Beschleunigungssensor im Wesentlichen vertikal im Verhältnis zu der Karosserie des Motorrades angeordnet und vorgesehen ist, die Komponente der Gravitationsbeschleunigung zu erfassen, wie sie durch eine Kosinusfunktion des Schräglagenwinkels der Karosserie des Motorrades bestimmt wird.

2. Vorrichtung nach Anspruch 1, **dadurch gekennzeichnet, dass** der Beschleunigungssensor (3) mit einem Steuerungsschaltkreis (2) der elektronischen Steuerungseinheit (1) verbunden ist.

3. Vorrichtung nach Anspruch 1 oder 2, **dadurch gekennzeichnet, dass** eine Filtereinrichtung (4) zwischen dem Beschleunigersensor (3) und dem Steuerungsschaltkreis (2) angeordnet ist, wobei die Filtereinrichtung gebildet wird durch Hardware, die Schaltkreise verwendet, oder durch Software, um die durch den Beschleunigersensor (3) erfassten Signale zu verarbeiten.

4. Vorrichtung nach zumindest einem der vorhergehenden Ansprüche 1 bis 3, **dadurch gekennzeichnet, dass** der Beschleunigersensor (3) verwendet wird, um eine Kollision auf der Grundlage eines Vergleichs einer Beschleunigung oder einer Abbremsung der Karosserie des Motorrades in der Fahrrichtung des Motorrades zu vorbestimmten Grenzwerten zu erfassen.

5. Vorrichtung nach zumindest einem der vorhergehenden Ansprüche 1 bis 4, **dadurch gekennzeichnet, dass** der Beschleunigersensor in dem Zustand der Verbindung der elektronischen Steuerungseinheit (1) mit der Karosserie des Motorrades nullkorrigiert ist, und ein beschreibbarer, nichtflüchtiger Speicher zum Speichern der Korrekturdaten vorgesehen ist.

6. Vorrichtung nach Anspruch 5, **dadurch gekennzeichnet, dass** der Steuerungsschaltkreis (2) vorgesehen ist, den Schräglagenwinkel des Motorrades aus sowohl einem tatsächlich Wert, der mit dem Beschleunigersensor (3) erfasst wird, als auch aus den Korrekturdaten in dem beschreibbareren, nichtflüchtigen Speicher zu berechnen.

**Revendications**

1. Dispositif pour détecter des états de fonctionnement d'un motocycle, comprenant une unité de commande électronique (1) et un capteur d'accélération (3) qui est installé dans l'unité de commande électronique (1) et adapté pour détecter une chute ou une chute et une collision du motocycle, dans lequel le capteur d'accélération (3) est agencé essentiellement latéralement par rapport au cadre du motocycle et est adapté pour détecter la composante de l'accélération de la gravité telle que déterminée par une fonction sinusoïdale de l'angle d'inclinaison latérale du cadre du motocycle ou le capteur d'accélération est agencé essentiellement verticalement par rapport au cadre du motocycle et est adapté pour détecter la composante de l'accélération de la gravité telle que déterminée par une fonction cosinusoïdale de l'angle d'inclinaison latérale du cadre du motocycle.

2. Dispositif selon la revendication 1, **caractérisé en ce que** le capteur d'accélération (3) est connecté à un circuit de commande (2) de l'unité de commande électronique (1).

3. Dispositif selon la revendication 1 ou 2, **caractérisé en ce que** des moyens de filtrage (4) sont agencés entre le capteur d'accélération (3) et le circuit de commande (2), dans lequel les moyens de filtrage sont formés par un matériel utilisant des circuits ou par un logiciel pour traiter les signaux détectés par le capteur d'accélération (3).

4. Dispositif selon au moins l'une des revendications précédentes 1 à 3, **caractérisé en ce que** le capteur d'accélération (3) est utilisé pour détecter une collision sur la base d'une comparaison d'une accélération ou d'une décélération du cadre du motocycle dans la direction d'avance du motocycle à des valeurs de seuil prédéterminées.

5. Dispositif selon au moins l'une des revendications précédentes 1 à 4, **caractérisé en ce que** le capteur d'accélération fait l'objet d'une correction de zéro dans l'état où l'unité de commande électronique (1) est fixée au cadre du motocycle, et une mémoire non volatile à écriture autorisée est prévue pour mémoriser des données de correction.

6. Dispositif selon la revendication 5, **caractérisé en ce que** le circuit de commande (2) est adapté pour calculer l'angle d'inclinaison latérale du motocycle à partir à la fois d'une valeur réelle détectée par le capteur d'accélération (3) et des données de correction dans la mémoire non volatile à écriture autorisée.

**1 : ECU**

**3**

Acceleration sensor

Filter **4**

**5**

Engine revolution sensor → Control circuit **2**

**6**

Intake pipe vacuum sensor →

Throttle opening sensor →

**7**

Ignition coil **8**

Fuel pump **9**

FIGURE 1

V Sensor output

Right side fall

· · · · · · · Fall judgment threshold

· · · · · · · Right side maximum bank

t

0

· · · · · · · Left side maximum bank

· · · · · · · Fall judgment threshold

Left side fall

FIGURE 2

EP 1 184 233 B1

Fall judgment subroutine

START

S1
Detect sensor output voltage.

S2
Compare with threshold;
Measure time.

S3
Fall?

No

Yes    S4
Stop fuel pump,
fuel injection,
and ignition.

S5
Recognized as normal.

RETURN

FIGURE 3

(A) 3 : Acceleration sensor

gsin θ  Left side fall

θ

g

V
g    Right side fall
V1

−90° −70°    Vehicle body angle θ
0   70° 90°

−V1

(B) 3 : Acceleration sensor

θ

g    gcos θ

V
g
V2

−90°         90°   Vehicle body angle θ
−70°  0  70°

FIGURE 4

9

(A)

Zero point setting routine

START

T1
Switch to test mode.

T2
Set vehicle body upright

T3
Measure zero point.

T4
Write to EEPROM.

END

(B)

Bank judgment routine

START

U1
Detect acceleration with acceleration sensor.

U3
Read EEPROM data.

U2
True detection value = Detection value − Zero point correction value

U4
Bank judgment

END

FIGURE 5

Collision judgment subroutine

```
        ┌─────────────┐
        │    START    │
        └──────┬──────┘
               │         P1
    ┌──────────▼──────────────────┐
    │ Detect acceleration (deceleration)│
    │   with acceleration sensor. │
    └──────────┬──────────────────┘
               │         P2
    ┌──────────▼──────────┐
    │ Compare with threshold;│
    │    Measure speed.    │
    └──────────┬──────────┘
               │         P3
         ◄─────▼─────►      No
          Collision?  ─────────────┐
          ◄─────┬────►             │
            Yes     P4        P5   │
    ┌──────────▼──────┐   ┌────────▼────────────┐
    │ Stop fuel pump, │   │ Recognized as normal.│
    │ fuel injection, │   └────────┬────────────┘
    │  and ignition.  │            │
    └──────────┬──────┘            │
               │◄─────────────────┘
        ┌──────▼──────┐
        │   RETURN    │
        └─────────────┘
```

FIGURE 6

Acceleration

Deceleration          Collision judgment threshold

Panic brake

FIGURE 7

11